Europäisches Patentamt

European Patent Office

Office européen des brevets

(11) Numéro de publication: **0 513 759 A1**

## DEMANDE DE BREVET EUROPEEN

(21) Numéro de dépôt: **92108072.7**

(22) Date de dépôt: **13.05.92**

(51) Int. Cl.5: **A47J 31/42**, A47J 42/16

(30) Priorité: **17.05.91 CH 1486/91**

(43) Date de publication de la demande:
**19.11.92 Bulletin 92/47**

(84) Etats contractants désignés:
**AT BE CH DE DK ES FR GB IT LI NL SE**

(71) Demandeur: **SISTAR SA**
**13, chemin St-Hubert**
**CH-1950 Sion(CH)**

(72) Inventeur: **In Albon, Jean-Paul**
**Rue des Pontets**
**CH-1957 Ardon(CH)**

(74) Mandataire: **Micheli & Cie**
**Rue de Genève 122, Case Postale 61**
**CH-1226 Genève-Thônex(CH)**

(54) **Moulin à café.**

(57) Ce moulin à café comporte deux dispositifs de mouture, chaque dispositif étant constitué par une meule annulaire fixe (1, 1') et une meule annulaire rotative (3, 3') montées en opposition, ces deux dispositifs de mouture étant superposés coaxiale- ment. Les meules rotatives (3, 3') des deux disposi- tifs sont entraînées en rotation par un axe unique (5, 5') relié à un seul moteur d'entraînement (M), à double sens de rotation, et les organes de coupe de l'une des deux paires de meules sont orientés pour une coupe à droite alors que ceux de l'autre paire de meules sont orientés pour une coupe à gauche.

EP 0 513 759 A1

La présente invention se rapporte à un moulin à café, plus particulièrement approprié pour être incorporé dans une machine à café automatique.

Pour moudre le café, il est déjà bien connu d'utiliser un dispositif qui comporte deux meules annulaires montées en opposition, l'une fixe, l'autre rotative, et dans lequel la force centrifuge propulse les grains de café moulus vers la périphérie des meules où une ouverture est prévue pour la récupération de la poudre de café.

Les machines à café automatiques modernes comportent presque toutes un moulin incorporé du type précité. Toutefois, la plupart de ces machines sont prévues pour fonctionner avec deux sortes différentes de café, la seconde sorte pouvant être par exemple un café sans caféine. Dans ce cas, il est actuellement nécessaire de monter dans la machine à café deux moulins séparés, c'est-à-dire avec pour chacun une alimentation, un corps avec les meules annulaires et un moteur d'entraînement de la meule rotative. Ceci conduit aux désavantages d'une part de nécessiter une machine de plus grandes dimensions et d'autre part de constituer une solution relativement coûteuse.

Le but de cette invention consiste donc à fournir un moulin à café qui permette de réaliser une économie substantielle au niveau du coût et surtout de conduire à un encombrement réduit.

Le moulin à café, objet de la présente invention et qui vise à atteindre le but ci-dessus, présente les caractéristiques définies dans la revendication 1.

Le dessin annexé illustre schématiquement et à titre d'exemple une forme d'exécution de l'invention.

La figure 1 en est une vue en coupe verticale.

Les figures 2A et 2B sont des vues en plan partielles des meules rotatives avec coupe à droite du premier étage, respectivement avec coupe à gauche du second étage.

Les figures 3 et 4 sont des vues du réservoir d'alimentation en grains, respectivement en coupe verticale et en plan.

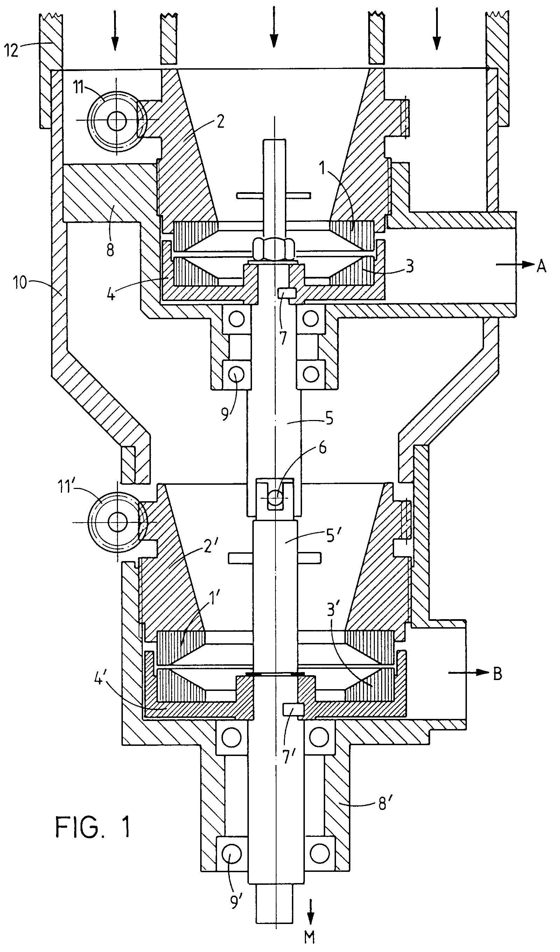

Le moulin à café selon l'invention, tel qu'il est illustré à titre d'exemple sur les figures 1 à 4, comporte en fait deux moulins de type connus superposés verticalement et coaxialement, chaque moulin formant un étage dudit moulin selon l'invention.

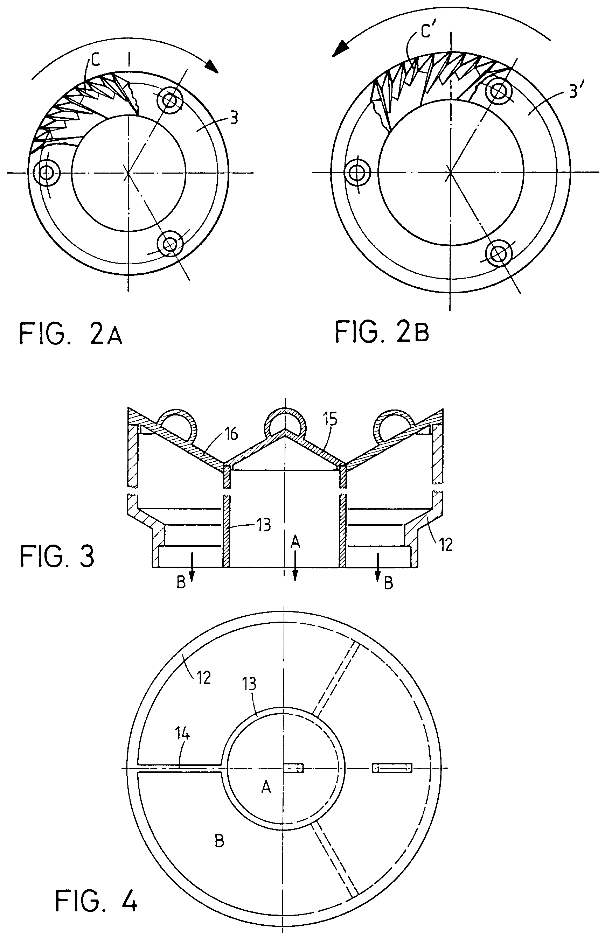

Chacun des étages comporte une meule annulaire fixe en rotation 1, 1' montée sur un porte-meule 2, 2' également fixe en rotation, ainsi qu'une meule annulaire rotative 3, 3' montée sur un porte-meule également rotatif 4, 4'. Les meules rotatives 3, 3' sont montées en opposition, de manière connue en soi, au- dessous des meules fixes 1, 1'. Ces meules 1, 1', 3, 3' sont constituées, également de manière connue en soi, par une couronne présentant une face plane et une face conique dirigée de manière inclinée vers le centre; dans cette face conique sont pratiquées des entailles non radiales formant des arêtes de coupe c, c' (voir figures 2A et 2B).

Par contre, comme représenté également sur les figures 2A et 2B, la meule rotative 3 de l'étage supérieur est prévue pour une coupe à droite, alors que la meule rotative 3' est prévue elle pour une coupe à gauche. De plus, comme on peut le constater, le diamètre des meules 3, 4 de l'étage supérieur est inférieur à celui des meules 3', 4' de l'étage inférieur du moulin à café.

L'entraînement en rotation des meules rotatives 3, 3' est assuré par deux axes de rotation 5, 5', ces axes étant alignés verticalement, reliés par une goupille d'accouplement 6 et entraînés en rotation par un seul moteur M (non montré) de préférence électrique. Les porte-meules rotatifs 4, 4' sont fixés radialement sur les axes de rotation 5, 5' respectifs au moyen de goupilles d'entraînement 7, 7'.

Chacun des deux étages du moulin comporte encore un corps 8, 8' dans lequel les éléments constitutifs décrits ci-dessus sont montés, ce corps présentant une sortie latérale A, B et un palier vertical pour la rotation de l'axe d'entraînement 5, 5', ce palier étant de préférence constitué par un roulement à billes 9, 9'.

Enfin, les porte-meules fixes en rotation 2, 2' sont montés déplaçables verticalement, par l'intermédiaire d'une vis sans fin de réglage 11, 11'. Cette vis sans fin 11, 11' peut être actionnée soit manuellement soit au moyen d'un petit moteur électrique à commande électronique, de manière à régler la hauteur de la meule fixe 2, 2' par rapport à la meule rotative 3, 3', et par là l'espace vertical séparant les arêtes de coupe des deux meules pour déterminer la granulométrie des grains de café moulus.

D'autre part, les corps 8, 8' des deux étages du moulin à café sont réunis verticalement par un corps de liaison 10 formant avec lesdits corps d'étages 8, 8' la paroi extérieure de préférence cylindrique du moulin selon l'invention.

Sur les figures 3 et 4 est représentée une réalisation du réservoir d'alimentation en grains 12, disposé en position de service coaxialement au-dessus du corps de l'étage supérieur du moulin à café de la figure 1. Ce réservoir, de préférence en forme d'entonnoir, comporte un tube de séparation central 13 dont l'espace interne cylindrique donne accès aux meules 3, 4 de l'étage supérieur. L'espace annulaire situé entre le tube central 13 et la paroi du réservoir 12 donne accès lui aux meules 3', 4' de l'étage inférieur du moulin à café; cet espace annulaire est de plus séparé verticalement par des parois de séparation 14 servant à rigidifier le réservoir 12.

L'accès aux deux compartiments du réservoir 12 depuis l'extérieur peut être fermé par des couvercles respectivement 15 et 16. Le couvercle central 15 présente une forme conique et ses parois permettent, lorsqu'il est présent, de verser facilement les grains de café à moudre dans la portion annulaire donnant accès au compartiment B. De même, le couvercle 16 est en forme d'anneau, dont le plan est incliné radialement de haut en bas et vers le centre du réservoir 12, de telle sorte que lorsqu'il est présent il permette de servir d'entonnoir pour verser facilement les grains de café dans le compartiment central A.

En ce qui concerne le fonctionnement du moulin à café à double corps ou à double étage selon l'invention, tel qu'il vient d'être décrit en référence au dessin annexé, il est le suivant.

Les deux sortes différentes de café en grains sont introduites dans les deux compartiments respectifs du réservoir 12. Les grains de café qui sont introduits au centre du réservoir 12 descendent par gravité dans le corps 8 pour atteindre les meules 3, 4 de l'étage supérieur A, alors que ceux introduits dans l'espace extérieur dudit réservoir 12 descendent par gravité à travers le corps de liaison 10 jusque dans le corps 8' pour atteindre les meules 3', 4' de l'étage inférieur B du moulin à café.

Lorsque l'utilisateur souhaite moudre les grains de café correspondants à celui introduit dans l'étage supérieur A du moulin, il doit alors mettre en route le moteur M de telle sorte que celui-ci fasse tourner les axes d'entraînement 5, 5' vers la droite. Alors, la meule rotative 3 est mise en rotation vers la droite et devient active pour moudre les grains de café en coopérant avec la meule fixe 4 du même étage A, bien entendu après réglage de la granulométrie souhaitée en agissant sur la vis de réglage 11. Le café moulu est alors entraîné vers l'extérieur par la force centrifuge et est expulsé par la sortie A vers un conduit ou dispositif de récupération (non montré).

Par contre, la rotation à droite des axes 5, 5' entraînera également la meule rotative 3' de l'étage inférieur B vers la droite; mais, étant donné que les meules 3', 4' de cet étage inférieur B sont prévues pour une coupe à gauche, cette rotation à droite de la meule 3' sera sans effet sur les grains de café situés dans la zone inférieure du moulin, à l'exception d'un léger mouvement vers le haut dû au déplacement d'air du fait de la rotation.

Bien entendu, lorsque l'utilisateur souhaite moudre les grains de café correspondant à ceux introduits dans l'étage inférieur B du moulin, il lui suffira alors d'inverser le mouvement de rotation du moteur M et par là des axes 5, 5', rendant ainsi les meules 3, 4 inactives et les meules 3', 4' actives.

Ainsi, il est possible avec le moulin à café selon l'invention de mettre à disposition de l'utilisateur un appareil qui, avec un seul moteur, permet de moudre deux sortes différentes de café par simple inversion du sens de rotation dudit moteur d'entraînement.

Le moulin à café selon l'invention peut être réalisé sous la forme d'un appareil de ménage séparé; toutefois, il est particulièrement avantageux pour être incorporé dans une machine à café automatique, ceci grâce à son faible encombrement dû à la présence de deux corps de moulin alignés axialement et d'un seul moteur. De même, il permet également de réaliser une économie substantielle sur le prix de revient d'une telle machine, ceci en apportant l'avantage de permettre la mouture de deux sortes différentes de café.

**Revendications**

1. Moulin à café, caractérisé par le fait qu'il comporte deux dispositifs de mouture, chaque dispositif étant constitué par une meule annulaire fixe et une meule annulaire rotative montées en opposition, par le fait que les deux dispositifs de mouture sont superposés coaxialement, les meules rotatives des deux dispositifs étant entraînées en rotation par un axe unique relié à un seul dispositif d'entraînement à double sens de rotation, et par le fait que les organes de coupe de l'une des deux paires de meules sont orientés pour une coupe à droite alors que ceux de l'autre paire de meules sont orientés pour une coupe à gauche.

2. Moulin à café selon la revendication 1, caractérisé par le fait que les meules rotatives sont chacune montée sur un porte-meule rotatif solidaire en rotation de l'axe d'entraînement, et les meules fixes sont chacune montées sur un porte-meule fixe solidaire d'un corps de dispositif de mouture.

3. Moulin à café selon la revendication 2, caractérisé par le fait que chaque corps de dispositif de mouture présente une ouverture latérale pour l'évacuation du café moulu et une ouverture axiale traversante, l'extrémité inférieure de cette ouverture étant munie d'un palier coopérant avec l'axe d'entraînement.

4. Moulin à café selon la revendication 2 ou la revendication 3, caractérisé par le fait que les porte-meules fixes en rotation sont montés déplaçables axialement, et coopèrent avec un organe de commande et de réglage de ce déplacement accessible depuis l'extérieur.

5. Moulin à café selon l'une des revendications 2 à 4, caractérisé par le fait qu'il comporte un corps intermédiaire reliant les deux corps de dispositifs de mouture.

6. Moulin à café selon l'une des revendications 2 à 5, caractérisé par le fait qu'il comporte encore un réservoir d'alimentation monté coaxialement au-dessus du corps de dispositif de mouture supérieur.

7. Moulin à café selon la revendication 6, caractérisé par le fait que ce réservoir est en forme d'entonnoir et qu'il présente un tube central axial donnant accès au corps de dispositif de mouture supérieur, l'espace annulaire entourant ce tube central axial donnant accès au corps de dispositif de mouture inférieur.

8. Moulin à café selon la revendication 7, caractérisé par le fait que le tube central axial est muni d'un couvercle amovible ayant la forme d'un cône, et que l'espace annulaire est muni d'un couvercle amovible ayant la forme d'un anneau dont le plan est radialement incliné de haut en bas et de l'extérieur vers l'intérieur.

FIG. 1

FIG. 2A

FIG. 2B

FIG. 3

FIG. 4

Office européen
des brevets

**RAPPORT DE RECHERCHE EUROPEENNE**

Numero de la demande

EP    92 10 8072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 074 679 (SACOME) <br> * page 1, ligne 15 - page 2, ligne 28; figures 1-3 * <br> --- | 1,2,4-6 | A47J31/42 <br> A47J42/16 |
| Y | DE-A-2 410 122 (BURGGRABE) <br> * page 7, alinéa 1 - page 12, dernier alinéa ; figures 1-3 * <br> --- | 1,2,4-6 | |
| P,A | EP-A-0 452 214 (COURTOIS) <br> * colonne 3, ligne 28 - colonne 6, ligne 14; figures 1-4 * <br> ----- | 1,2,4,5 | |

**DOMAINES TECHNIQUES RECHERCHES (Int. Cl.5)**

A47J

Le présent rapport a été établi pour toutes les revendications

| Lieu de la recherche | Date d'achèvement de la recherche | Examinateur |
|---|---|---|
| LA HAYE | 20 AOUT 1992 | HERYGERS J.J. |